(19) Europäisches Patentamt
European Patent Office
Office européen des brevets

(11) Numéro de publication: **0 294 271**
**A1**

# (12) DEMANDE DE BREVET EUROPEEN

(21) Numéro de dépôt: **88401259.2**

(22) Date de dépôt: **24.05.88**

(51) Int. Cl.4: **C 08 G 18/62**
C 09 J 3/16

(30) Priorité: **05.06.87 FR 8707954**

(43) Date de publication de la demande:
**07.12.88 Bulletin 88/49**

(84) Etats contractants désignés:
**AT BE DE FR GB IT NL SE**

(71) Demandeur: **ATOCHEM**
**4 & 8, Cours Michelet La Défense 10**
**F-92800 Puteaux (FR)**

(72) Inventeur: **Boutillier, Jacques**
**Carsix**
**F-27300 Bernay (FR)**

**Forichon, Noelle**
**11, Rue du Haut Phare**
**F-27110 Le Neubourg (FR)**

**Lermat, Yves**
**Fontaine l'Abbé**
**F-27470 Serquigny (FR)**

(74) Mandataire: **Foiret, Claude et al**
**ATOCHEM Département Propriété Industrielle**
**F-92091 Paris la Défense 10 Cédex 42 (FR)**

## (54) Composition pour adhésif thermofusible réticulable - adhésif en résultant - procédé de collage.

(57) L'invention concerne une composition pour adhésif thermofusible réticulable formée d'un copolymère éthylène-acétate de vinyle contenant des fonctions hydroxyles primaires et d'un polyisocyanate bloqué. Cette composition associée à une résine collante (tackifiante), qui peut d'ailleurs servir d'agent de blocage du polyisocyanate, conduit à un adhésif thermofusible réticulable. On utilise l'adhésif à une température au moins égale à celle de déblocage des fonctions isocyanates du polyisocyanate. La température de tenue de collage de tels adhésifs peut atteindre 200-220° C.

EP 0 294 271 A1

**Description**

## COMPOSITION POUR ADHESIF THERMOFUSIBLE RETICULABLE -ADHESIF EN RESULTANT - PROCEDE DE COLLAGE

La présente invention concerne une composition pour adhésif thermofusible réticulable formée d'un copolymère éthylène acétate de vinyle contenant des fonctions hydroxyles primaires et d'un polyisocyanate bloqué. Cette composition associée à une résine collante (tackifiante) permet de réaliser des collages résistant à température élevée.

Les adhésifs se présentent généralement sous forme liquide et se rigidifient après application en assurant la liaison des surfaces à unir. Cette rigidification résulte habituellement de la polymérisation ou de la polycondensation des composants de base de l'adhésif. Depuis quelques années on cherche de plus en plus à présenter également les compositions adhésives sous forme solide. Il s'agit dans ce cas d'adhésifs thermofusibles (hot-melts) ayant pour base une résine thermoplastique, solide à température ambiante, possédant des propriétés adhésives. Ces adhésifs sont fluidifiés à chaud, la liaison des surfaces à unir étant assurée lorsque l'adhésif redevient rigide au refroidissement. Ces adhésifs thermofusibles résultent généralement de la combinaison de deux constituants de base : une résine thermoplastique et une résine collante (tackifiante) auxquels on peut associer des additifs tels que cire, stabilisant, charges, plastifiants et autres. Dans l'état actuel ces adhésifs thermofusibles possèdent de bonnes propriétés adhésives, mais présentent l'inconvénient de montrer une mauvaise tenue à la chaleur, tenue n'excédant guère 70 à 80° C. Les résines thermoplastiques de base les plus connues sont les polyamides, le polypropylène atactique et en particulier les copolymères éthylène-acétate. de vinyle.

La présente invention concerne une composition pour adhésif thermofusible possédant une bonne tenue à la chaleur, la température de tenue de collage pouvant atteindre 200 à 220° C. Cette composition est à base de copolymère éthylène-acétate de vinyle possédant des fonctions hydroxyles primaires, appelée ci-après EVA par simplification, associé à un polyisocyanate bloqué. Cette composition EVA-polyisocyanate est selon la règle générale completée d'une résine collante (tackifiante) pour réaliser l'adhésif lui-même.

L'EVA utilisé dans la composition selon l'invention est en fait un terpolymère d'éthylène, d'acétate de vinyle et d'un monomère éthylénique possédant au moins une fonction hydroxyle primaire.

Cet EVA peut être obtenu de façon connue par greffage sur le copolymère d'éthylène et d'acétate de vinyle du monomère éthylénique hydroxylé. Le greffage s'effectue habituellement par voie radicalaire en solution, suspension ou en masse à l'état fondu. Le terpolymère peut encore être obtenu par polymérisation directe des trois monomères, procédé connu représentant la voie la plus avantageuse.

Parmi les monomères éthyléniques possédant au moins une fonction hydroxyle primaire on utilise de préférence : l'acrylate d'hydroxyéthyle et le méthacrylate d'hydroxyéthyle, mais on peut aussi utiliser les monomères de formule

$$R_1 - CH_2 = \underset{\substack{| \\ R_2}}{CH} - R_3 - CH_2OH$$

$R_1$ représentant un reste d'hydrocarbure ou l'hydrogène,
$R_2$ représentant l'hydrogène ou le groupement méthyl
$R_3$ représentant un groupement ester, amide ou alkyl

Parmi ces monomères éthylèniques on peut citer à titre d'exemples : l'alcool allylique, l'alcool oléylique, la N-hydroxyméthylacrylamide.

La composition de l'EVA est une combinaison en poids rapportée aux monomères initiaux de 45 à 93 % d'éthylène, de 5 à 40 % d'acétate de vinyle et de 2 à 15 % de monomère éthyléniquement insaturé possédant au moins une fonction hydroxyle primaire. Préférentiellement l'EVA contient de $2 \times 10^{-2}$ à $15 \times 10^{-2}$ moles d'OH primaires pour 100 g. de copolymère.

L'EVA précédemment décrit est associé dans la composition pour adhésif à un polyisocyanate bloqué. On entend par polyisocyanate des composés polyfonctionnels possédant au moins deux fonctions -NCO par molécule. Ce polyisocyanate peut être choisi parmi les isocyanates polyfonctionnels aliphatiques, cycloaliphatiques, aromatiques et/ou hétérocycliques ; on préfère cependant des diisocyanates tels que, parmi les plus connus, le toluène diisocyanate, le diphénylméthane diisocyanate, le diisocyanate d'hexaméthyle ou encore l'isophorone diisocyanate. Le polyisocyanate entre dans la composition sous forme bloquée. On entend par polyisocyanate bloqué un polyisocyanate dont les fonctions -NCO sont combinées sous une forme réversible entre eux et/ou au moyen de composés appropriés appelés agents de blocage. Comme agent de blocage du polyisocyanate on utilise en général des combinaisons avec de l'hydrogène actif ; à cet effet on utilise de préférence des phénols, des alcools, des lactames, des oximes ou encore des amines secondaires. A titre d'exemple on peut citer comme agent de blocage le 2-6-di-tert-butyl-4-méthylphénol, le 4-tert-butyl-phénol, le m-crésol, le 4-4'-thio-bis(3-méthyl-6-tert-butylphénol) ainsi que l'epsilon caprolactame ou la benzophénoxime. Toutefois afin de renforcer les propriétés adhésives ultérieures de la combinaison on

préfère utiliser comme agent de blocage une résine collante (tackifiante). Cette résine collante (tackifiante) est choisie parmi celles présentant des fonctions libres susceptibles de bloquer les fonctions isocyanates. Il s'agit en général de résines collantes (tackifiantes) possédant des fonctions phénoliques libres et plus particulièrement des résines terpène-phénoliques. Ces résines terpène-phénoliques habituellement de poids moléculaire compris entre 500 et 5 000 résultent de la copolymérisation de composés phénoliques avec des dérivés terpéniques.

Le polyisocyanate bloqué est stable à la température et à la chaleur ambiante. Il peut être mélangé à l'EVA à une température élevée, tout en restant à une température inférieure à celle de déblocage des fonctions -NCO, sans effet d'estérification. Il est utilement mélangé à l'EVA en proportion telle que le rapport des -NCO bloqués du polyisocyanate sur les -OH primaires de l'EVA soit compris entre 0,1 et 1. Ce prémélange constitue la composition pour adhésif thermofusible réticulable objet de l'invention. Ce prémélange peut être conservé pendant de longues périodes.

La composition selon l'invention, associée à une résine collante (tackifiante), donne un adhésif thermofusible possédant une excellente tenue à température élevée. La quantité de résine collante (tackifiante) par rapport à la composition est préférentiellement de l'ordre de 0 à 70 parties en poids pour 100 à 30parties en poids de la composition EVA-polyisocyanate bloqué. La résine collante (tackifiante) confère à l'adhésif thermofusible un meilleur pouvoir collant. Il s'agit généralement de composés à bas poids moléculaire, de l'ordre de 400 à 2500. Comme leur nom l'indique, ils apportent du poissant : propriété qui provient soit du haut degré de plastification de la composition polymère soit d'une compatibilité limite avec la composition polymérique. Ces résines collantes (tackifiantes), connues en elles-mêmes appartiennent principalement à trois grandes familles : les colophanes et leurs dérivés hydrogénés, dismutés, maléisés, esters, les résines terpéniques et les résines de pétrole par exemple : aliphatiques, aliphatiques modifiées aromatiques, hydrogénées.

Lorsque la polyisocyanate de la composition est bloquée par une résine collante (tackifiante), il peut ne pas être nécessaire d'ajouter de résine collante (tackifiante), la composition pouvant directement être utilisée comme adhésif.

Il n'est cependant pas exclu dans ce cas de rajouter à la composition une résine collante (tackifiante) identique ou différente de celle utilisée comme agent de blocage des fonctions -NCO du polyisocyanate.

Il est bien entendu possible d'incorporer à l'adhésif les additifs habituels déjà cités.

L'adhésif obtenu est mis en oeuvre à température élevée, en particulier à une température d'au moins 130° C. Il s'agit en fait de la température où les polyisocyanates bloqués commencent à se dissocier en libérant leurs fonctions d'origine, autrement dit les fonctions isocyanates libres se reforment en se débloquant. La réaction des isocyanates avec les fonctions hydroxyles primaires de l'EVA provoque la réticulation de l'EVA ce qui a pour conséquence inattendue une nette amélioration de la tenue en température de l'adhésif par rapport aux autres adhésifs thermofusibles connus.

La réaction de déblocage des isocyanates et de leur réticulation avec les groupements hydroxyles peut être favorisée en utilisant un catalyseur. Ce catalyseur est habituellement choisi parmi les sels métalliques, comme le sel d'étain on encore parmi les amines tertiaires comme par exemple le dilaurate de dibutyle étain (DLDBSn) ou le diazabicyclooctane (DABCO).

Les exemples suivants illustrent l'invention sans toutefois la limiter.

EXEMPLE 1

Dans un réacteur de 2 litres muni d'un moyen d'agitation et de chauffage on prépare un diisocyanate 4,4'diphényle méthane (MDI) bloqué par une résine collante (tackifiante) terpène-phénolique (URAVAR 75205 de DSM). On introduit dans l'ordre :

480 g. de résine terpène-phénolique
1,3 litre de xylène
0,1 litre de toluène
75 g. de MDI

On maintient une température de 60° C jusqu'à la dissolution complète de la résine et du polyisocyanate. On élève progressivement la température à 120° C, maintenue pendant deux heures. Après refroidissement la solution est versée dans un hydrocarbure aliphatique. Le produit précipité est filtré puis séché sous vide.

La composition adhésive est préparée dans une cuve de 60 $cm^3$ d'un plastographe BRABENDER à cylindre du type 50. Les composés sont incorporés dans l'ordre suivant : EVA, éventuellement une résine collante (tackifiante), puis le polyisocyanate bloqué. L'ensemble est malaxé pendant 10 mn. à 100° C en présence éventuellement de DLDBSn.

Le mélange est déposé entre les deux plaques d'aluminium. L'ensemble est comprimé sous une pression de 0,1 MPa pendant 5 mn. à 160° C pour les essais 1, 3, 7 de 180° C pour les essais 2, 4, 5.

L'évaluation des propriétés adhésives est effectuée selon :

Pelage en T : norme ASTM D 1876
Méthode de cisaillement : norme ASTM D 1002
Méthode de fluage S.A.F.T.

La méthode de fluage S.A.F.T. consiste à susprendre une charge de 1 Kg. à une éprouvette préparée pour l'essai de cisaillement. L'ensemble est placé dans une étude programmé pour une montée en température de 5° C par minute. Le S.A.F.T. est la température à laquelle le joint se rompt. Cette mesure permet de déterminer

la température maximum d'utilisation de l'adhésif.

EXEMPLE 2

L'Exemple 1 est reproduit avec un MDI bloqué par l'epsilon caprolactame dans les conditions ci-après.

Dans un réacteur de 1 l muni d'un moyen d'agitation et de chauffage on prépare un diisocyanate 4,4' diphényle méthane (MDI) bloqué par le caprolactame.

On introduit dans l'ordre :

118,65 g. Caprolactame

95 g . 2 Ethoxy ethyl acétate.

On maintient une température de 60°C jusqu'à la dissolution complète du caprolactame ; puis on laisse redescendre à température ambiante. On ajoute alors progressivement sous une bonne agitation la solution de :

131,25 g. MDI

394 g. 2 Ethoxy ethyl acétate.

On chauffe progressivement jusqu'à 70°C, jusqu'à formation de l'isocyanate bloqué qui précipite. Ce précipité est filtré, lavé à l'hexane, puis séché sous vide à 40°C.

Les compressions entre les plaques d'aluminium sont faites à 160°C pour les essais 6, 8 et 9.

Les compositions et les résultats obtenus sur les essais des deux exemples sont résumés dans les deux tableaux ci-après.

TABLEAU 1

| ESSAIS | | 1 COMPARATIF | 2 |
|---|---|---|---|
| Composition adhésive | | EVA : 100 g<br>DERTOPHENE T : 50 g | EVA : 100 g<br>DERTOPHENE T : 50 g<br>MDI BLOQUE A : 11,3g<br>DLDBSn : 0,1g |
| Rapport NCO / OH primaire | | 0 | 0,5 |
| Fluage S.A.F.T. en °C | | 80 | > 225 |
| Résistance au cisaillement (MPa) | à 20°C<br>à 60°C<br>à 80°C | 5,7<br>0,4<br>0,1 | 8,2<br>2,3<br>1,0 |
| Résistance au pelage (DaN/cm) | à 20°C<br>à 60°C<br>à 80°C | 1,4<br>0,3<br>0,1 | 3,0<br>0,7<br>0,3 |

EVA : Terpolymère à en poids : Ethylène 72 %, Acétate de Vinyle 23 %, Acrylate d'Hydroxyéthyle 5 %

MDI bloqué A : MDI bloqué Résine terpène phénolique

DERTOPHENE T : Résine terpène phénolique de DRT

TABLEAU 2

| ESSAIS | | 3 comparatif | 4 | 5 | 6 | 7 comparatif | 8 | 9 |
|---|---|---|---|---|---|---|---|---|
| composition adhésive | | EVA | EVA 100g<br>MDI bloqué A 5,7g | EVA 100g<br>MDI bloqué A 22,6g | EVA 100g<br>MDI bloqué B 2,56g<br>DLDBSn 0,1 g | EVA 100g<br>DERTOPHENE T 50g | EVA 100g<br>DERTOPHENE T 50g<br>MDI bloqué B 2,5g<br>DLDBSn 0,1g | EVA 100g<br>DERTOPHENE T 50g<br>MDI bloqué B 5,1g<br>DLDBSn 0,1g |
| Rapport NCO / OH primaire | | 0 | 0,25 | 1 | 0,25 | 0 | 0,25 | 0,5 |
| Fluage S.A.F.T. en °C | | 90 | 145 | >225 | >225 | 80 | 140 | >225 |
| Résistance au cisaillement (MPa) | à 60°C | 1,2 | 1,5 | 1,9 | 2,3 | 0,4 | 0,9 | 1,7 |
| | à 80°C | 0,1 | 0,3 | 0,4 | 0,5 | 0,1 | 0,3 | 0,5 |
| Résistance au pelage (DaN/cm) | à 60°C | 0,7 | 0,85 | 1,3 | 1,0 | 0,3 | 0,8 | 0,4 |
| | à 80°C | 0,1 | 0,10 | 0,2 | 0,2 | 0,1 | 0,2 | 0,3 |

EVA : Terpolymère à en poids : Ethylène 72 %, Acétate de Vinyle 23 %, Acrylate d'Hydroxyéthyle 5 %

MDI bloqué A : MDI bloqué Résine terpène phénolique

MDI bloqué B : MDI bloqué epsilon caprolactame

DERTOPHENE T : Résine terpène phénolique de DRT

**Revendications**

1.- Composition pour adhésif thermofusible réticulable à base de copolymère éthylène-acétate de vinyle caractérisée en ce qu'on associe au copolymère éthylène-acétate de vinyle possédant des fonctions hydroxyles primaires un polyisocyanate bloqué.

2.- Composition selon la revendication 1 caractérisée en ce que le copolymère éthylène-acétate de vinyle à fonctions hydroxyles primaires est une combinaison en poids de 45 à 93 % d'éthylène, 5 à 40 % d'acétate de vinyle de 2 à 15 % de monomère éthyléniquement insaturé possédant au moins une fonction hydroxyle primaire.

3.- Composition selon l'une des revendications 1 ou 2 caractérisée en ce que le copolymère éthylène-acétate de vinyle à fonctions hydroxyles primaires possède de $2 \times 10^{-2}$ à $15 \times 10^{-2}$ moles d'hydroxyles primaires par 100 g. de copolymère.

4.- Composition selon l'une des revendications 1 à 3 caractérisée en ce que le rapport des -NCO bloqués du polyisocyanate sur les -OH primaires du copolymère éthylène-acétate de vinyle est compris entre 0,1 et 1.

5.- Composition selon l'une des revendications 1 à 4 caractérisée en ce qu'on mélange au copolymère éthylène-acétate de vinyle possédant des fonctions hydroxyles primaires le polyisocyanate bloqué à une température inférieure à celle de déblocage des fonctions -NCO.

6.- Composition selon l'une des revendications 1 à 4 caractérisée en ce que le polyisocyanate est bloqué par une résine collante (tackifiante).

7.- Adhésif thermofusible réticulable à base de copolymère éthylène-acétate de vinyle et de résine collante (tackifiante) caractérisé en ce que l'acétate de vinyle possède des fonctions hydroxyles et qu'on associe à l'ensemble un polyisocyanate bloqué.

8.- Adhésif selon la revendication 7 caractérisé en ce que la résine collant (tackifiante) sert d'agent de blocage du polyisocyanate.

9.- Procédé de collage consistant à chauffer un adhésif thermofusible réticulable, constitué d'un copolymère éthylène-acétate de vinyle possédant des fonctions hydroxyles, un polyisocyanate bloqué, et une résine collante (tackifiante), à une température au moins égale à celle de déblocage des fonctions -NCO du polyisocyanate.

10.- Procédé selon la revendication 9 caractérisé en ce que l'adhésif thermofusible est chauffé à une température d'au moins 130° C.

Office européen des brevets

# RAPPORT DE RECHERCHE EUROPEENNE

Numero de la demande

EP 88 40 1259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 237 674 (EIB)<br>* Page 4, ligne 1 - page 8, ligne 18; revendications 1-22 * | 1-10 | C 08 G 18/62<br>C 09 J 3/16 |
| Y | EP-A-0 041 192 (SIEMENS)<br>* Page 2, ligne 16 - page 5, ligne 34; exemples 4,8-10; revendications 1-10 * | 1-10 | |
| A | CHEMICAL ABSTRACTS, vol. 86, no. 4, 24 janvier 1977, page 69, résumé no. 17960m, Columbus, Ohio, US; & JP-A-76 114 438 (MITSUBISHI PETROCHEMICAL CO., LTD) 08-10-1976<br>* Résumé * | 1 | |
| | | | DOMAINES TECHNIQUES RECHERCHES (Int. Cl.4) |
| | | | C 08 G<br>C 08 L<br>C 09 J |

Le présent rapport a été établi pour toutes les revendications

| Lieu de la recherche | Date d'achèvement de la recherche | Examinateur |
|---|---|---|
| LA HAYE | 03-07-1988 | BOURGONJE A.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)